# EUROPEAN PATENT APPLICATION

(11) **EP 1 711 042 A1**
(43) Date of publication of application: **11.10.2006**
(21) Application number: 04807910.7
(22) Date of filing: 27.12.2004
(51) Int. Cl.: H05K 5/02, H01H 13/04

(54) **ELECTRONIC DEVICE**

(30) Priority: 30.01.2004 JP 2004024133
(71) Applicant: KABUSHIKI KAISHA TOSHIBA, Tokyo 105-8001 (JP)
(72) Inventor: MURAYAMA, Tomomi, c/o Toshiba Corporation ,, Minato-ku, Tokyo 105-8001 (JP); HIRATOMO, Shinji c/o Toshiba Corporation,, Minato-ku, Tokyo 105-8001, (JP); ONISHI, Hiroyuki c/o Toshiba Corporation,, Minato-ku, Tokyo 105-8001 (JP); MIURA, Yosuke c/o Toshiba Corporation, Minato-ku, Tokyo 105-8001 (JP)
(74) Representative: Henkel, Feiler & Hänzel
(86) International application number: PCT/JP2004/019555
(87) International publication number: WO 2005/074343

(57) **Abstract**

A main circuit board (27) is mounted on a main body (2). A switch circuit board (20) is held in a mounting portion (13) such that switches (21 and 22) face upwards. As the switch circuit board (20) is held in the mounting portion (13), positioning projections (14a and 14b) formed on a bottom wall (14) are pierced through positioning holes (16a and 16b), respectively, and thus the positioning of the switch circuit board (20) inside the mounting portion (13) can be easily carried out. A switch cover (10) is provided above the switch circuit board (20) held in the mounting portion (13). A plurality of projections (25a, 25b, 25c and 25d) projecting downwards from the inner surface of the switch cover (10) are brought into contact with the upper surface of the switch substrate (20). As these projections press the upper surface of the switch substrate (20), the up-and-down rattling of the switch circuit board (20) inside the mounting portion (13) can be prevented.

## Description

### Technical Field

The present invention relates to an electronic apparatus, and more specifically to a cover of a circuit board on which a switch is mounted.

### Background Art

Conventionally, it is general that a circuit board mounted inside an electronic apparatus such a notebook personal computer is divided into a main circuit board (, on which, for example, CPU is mounted), sub-circuit boards and the like each having a respective function (such as an extended memory board, LED board and switch board). In such an electronic apparatus, sub-circuit boards are covered with a cover after they are mounted regardless of the type of each board, whether it is mounted afterwards in the housing by the user or it is mounted in the section where it should be placed while the electronic apparatus is being assembled after the housing is formed. The sub-circuit boards are fixed onto the housing or the main circuit board or the like set inside by means of fixing means such as screws. After that, a cover or the like is fixed to the housing with screws.

For example, Jpn. Pat. Appln. KOKAI Publication No. 10-124172 discloses in page 9 and FIG. 12 such a structure in which a memory board is fixed with screws and then a cover is fixed with screws. Such s structure requires a step for fixing a circuit board with screws and also a step of fixing a cover with screws, which increases the load on the assembling process for the product and also increases the number of steps involved in the manufacturing process. Further, a number of screws are used for the fixation, and the production cost is increased by the screws.

### Disclosure of Invention

The object of the present invention is to provide an electronic apparatus that can reduce its production cost and improve its ease of assembling.

According to the first aspect of the present invention, there is provided an electronic apparatus comprising: a housing including a mounting portion having a bottom wall is formed; a first circuit board held in the mounting portion and mounted on the bottom wall; and a cover mounted in the housing such as to cover the first circuit board held in the mounting portion and having projections configured to hold the first circuit board between the bottom wall and the projections themselves.

According to the present invention, the production cost of the electronic apparatus can be reduced and further the ease of assembling can be improved.

### Brief Description of Drawings

FIG. 1 is a perspective view of an example of an electronic apparatus according to an embodiment of the present invention;
FIG. 2 is an exploded perspective view illustrating an example of the structure of a switch cover portion;
FIG. 3 is a perspective view illustrating an example of the structure of a rear surface of the switch cover portion;
FIG. 4 is a cross sectional view illustrating the example of the structure of the switch cover portion;
FIG. 5 is a cross sectional view illustrating another example of the structure of the switch cover portion; and
FIG. 6 is a perspective view of another example of the electronic apparatus according to the embodiment of the present invention.

### Best Mode for Carrying Out the Invention

An embodiment of the present invention will now be described with reference to accompanying drawings.

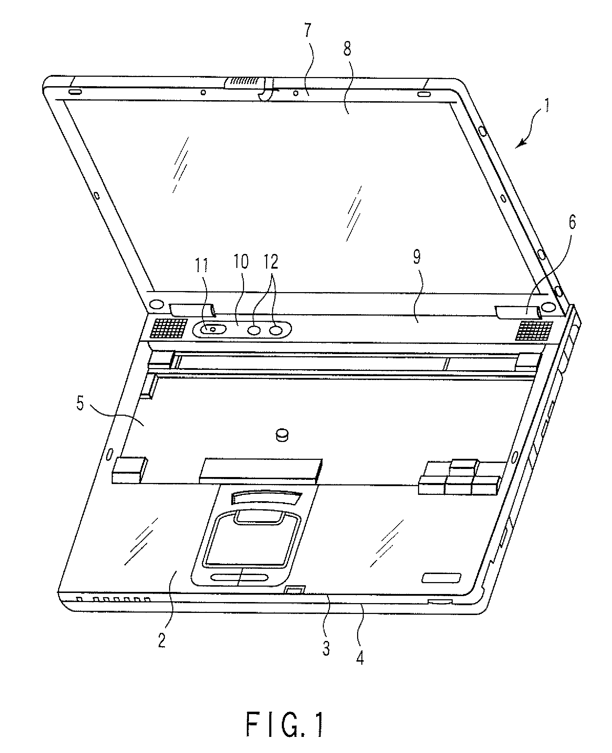

FIG. 1 is a perspective view of an example of the electronic apparatus according to an embodiment of the present invention. As shown in FIG. 1, an electronic apparatus 1 such as a computer includes a main body 2. A housing of the main body 2 includes an upper case 3 and a lower case 4 to be engaged with the upper case 3. A keyboard 5 is mounted on an upper surface of the upper case 3. A display unit 7 is jointed to the main body 2 by means of hinge portions 6 such as to be pivotable between a close position where the keyboard 5 is covered by the display unit 7 and an open position where the keyboard 5 is opened. A display panel 8 is built in the display unit 7, and the panel is exposed from the front surface of the display unit 7.

A cover 9 is provided in a rear section of the main body 2 and the cover 9 forms a part of the upper case 3. A switch cover 10 is provided on an upper surface of the cover 9. The switch cover 10 includes a power operating portion 11 operated by the user to turn on the power of the electronic apparatus 1 and other operating portions 12. The operating portions 12, which are two or more portions, include, for example, a browser starting button used to connect to the Internet and a starting button for an e-mail software program.

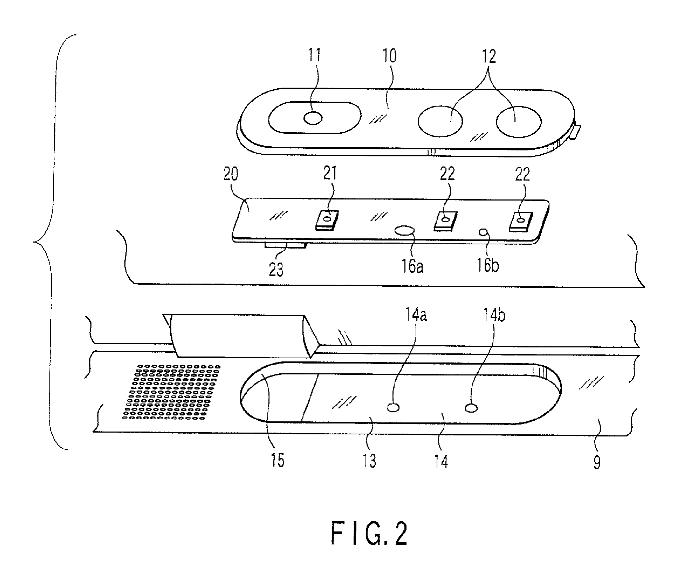

FIG. 2 is an exploded perspective view illustrating an example of the structure of a switch cover portion. A mounting portion 13 is made in the cover 9. The mounting portion 13 has a bottom wall 14 and the cover 9 and the bottom wall 14 are formed as an integral unit. A pair of projections 14a and 14b are integrally formed on the bottom wall 14 and these projections are used to position a circuit board, which will be described later. Further, the mounting portion 13 has an opening portion 15 formed therein such as to communicate to the inside of the main body 2. The opening portion 15 is formed in the bottom wall 14. A switch circuit board 20 is inserted to the mounting portion 13. The switch circuit board 20 has such a size that it can be placed within the mounting portion 13. A power switch 21 and a group of switches 22 are mounted on the upper surface of the switch circuit board 20.

Further, a connector 23 is mounted on the rear surface of the switch circuit board 20 and the connector is electrically connected to the power switch 21 and the group of switches 22. The power switch 21 is a switch that is turned on when the power operating portion 11 is operated. The group of switches 22 correspond to the operating portions 12, respectively, and when one of the operating portions 12 is operated, a respective one of the switches 22 is turned on. The switch circuit board 20 has positioning holes 16a and 16b that correspond respectively to the positioning projections 14a and 14b provided on the bottom wall 14 of the mounting portion 13. As the switch circuit board 20 is held in the mounting portion 13, the positioning holes 16a and 16b fit respectively with the positioning projections 14a and 14b, and thus the positioning of the switch circuit board 20 inside the mounting portion 13 can be easily carried out.

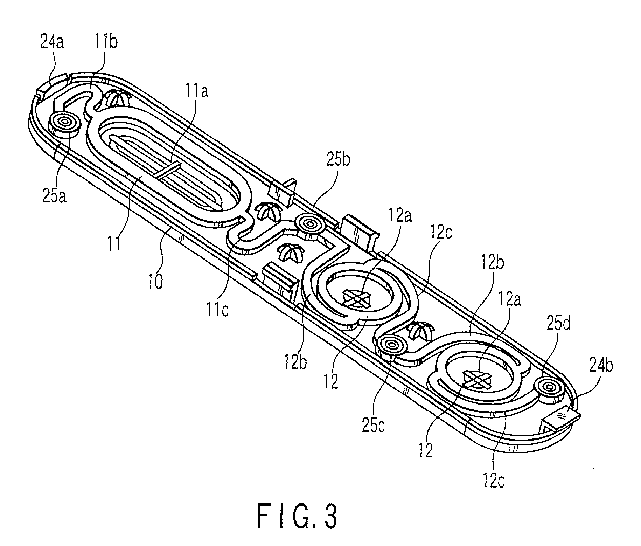

FIG. 3 is a perspective view illustrating an example of the structure of the rear surface of the switch cover 10. Latch pieces 24a and 24b are integrally formed on respective ends of the rear surface of the switch cover 10 and the latch pieces are designed to engage with mounting portion 13. The power operating portion 11 is formed as a separate body from the switch cover 10. A projection 11a is formed at a center of the rear surface of the operating portion 11 to be integrally therewith, and the projection 11a operates the power switch 21. Both end portions of the power operating portion 11 are supported elastically by curved arms 11b and 11c. As the power operating portion 11 is pressed down from an upper direction, the operating portion 11 is pushed elastically downwards in the electronic apparatus 1 by means of the arms 11b and 11c. As the operating portion 11 moves as just described, the projection 11a operates the power switch 21. Similarly, projections 12a are formed on the rear surfaces of the operating portions 12 to be integrally therewith. The operating portions 12 are supported by the switch cover 10 elastically via a pair of arms 12b and 12c. A plurality of projections 25a, 25b, 25c and 25d are formed on the rear surface of the switch cover 10 to be integrated with the cover 10.

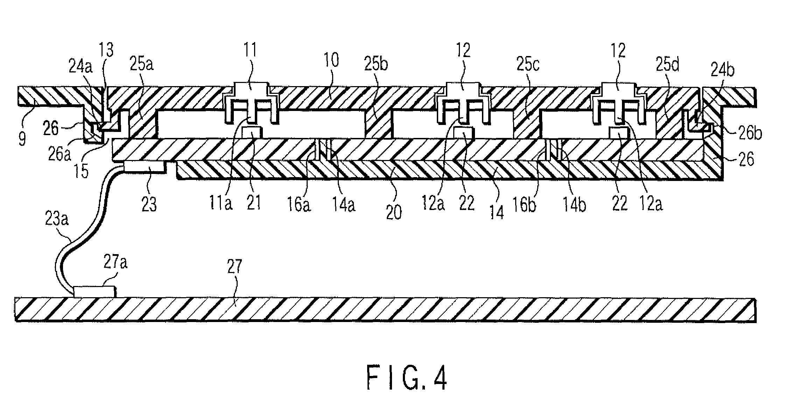

FIG. 4 is a cross sectional view illustrating the example of the structure of the switch cover portion. A main circuit board 27 is mounted inside the main body 2. A connector 27a is mounted to the main circuit board 27. The mounting portion 13 formed in the cover 9 is defined by the bottom wall 14 and side walls 26 that connect the upper surface of the cover 9 and the bottom wall 14. The opening portion 15 in the mounting portion 13 ranges over the bottom wall 14 and the side walls 26. The switch circuit board 20 is held within the mounting portion 13 such that the switches 21 and 22 face upwards. In the mounting portion 13, the switch circuit board 20 can be easily positioned as the positioning projections 14a and 14b formed on the bottom wall 14 are pierced through to fit with the positioning holes 16a and 16b, respectively.

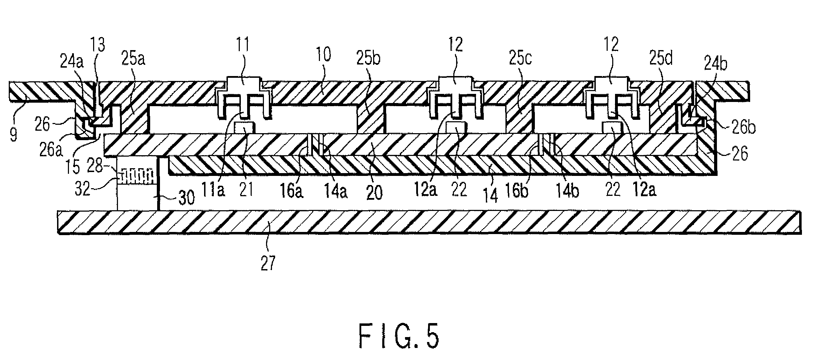

The connector 23 mounted on the rear surface of the switch circuit board 20 is exposed from the opening portion 15 to the inside of the main body 2 as the switch circuit board 20 is held in the mounting portion 13. The connector 23 is electrically connected to a connector 27a of the main circuit board 27 mounted to the main body 2 via a cable 23a such as a flexible cable. Alternatively, in place of the connector 23 of the switch circuit board 20 connected by the cable 23a, and the connector 27a of the main circuit board 27, such a structure as shown in FIG. 5 can be employed. That is, a male connector 30 having a pin 28 is provided for the main circuit board 27 and a female connector 32 is provided for the switch circuit board 20. Then, the pin 28 is plugged into the female connector 32 to engage the male connector 30 and female connector 32 directly with each other as well as electrically connect them with each other.

The switch cover 10 is mounted to the upper section of the switch circuit board 20 held in the mounting portion 13. As the latch pieces 24a and 24b formed on the respective ends of the switch cover 10 engage with the engage portions 26a and 26b provided on the side walls 26 of the mounting portion 13, respectively, the switch cover 10 is detachably mounted to the mounting portion 13.

The projection 11a of the power operating portion 11 is located above the power switch 21 to face the switch 21. The power operating portion 11 is supported by the arms 11b and 11c shown in FIG. 3. With this structure, as the operating portion 11 is pushed downwards by the user, the projection 11a operates the power switch 21. When the user releases the finger from the operating portion 11, the operating portion 11 is pushed upwards by the arms 11b and 11c to restore the normal position. In this manner, the projection 11a releases the power switch 21. The operating portions 12 and switch 22 are operated in the same way as described above, and therefore the explanations therefor will be omitted.

The plurality of projections 25a, 25b, 25c and 25d projecting downwards from the inner surface of the switch cover 10 are brought into contact with the upper surface of the switch substrate 20. As these projections 25a, 25b, 25c and 25d press the upper surface of the switch substrate 20, the up-and-down rattling of the switch circuit board 20 inside the mounting portion 13 can be prevented. Further, when the female connector 32 of the switch circuit board 20 is jointed directly to the male connector 30 of the main circuit board 27 using the pin 28, the switch circuit board 20 can be fixed even more firmly. This is because the female connector 32 and the male connector 30 are joined with each other by themselves in addition to the structure in which the upper surface of the switch circuit board 20 is pressed by the projections 25a, 25b, 25c and 25d.

With the above-described structure, there is no need to provide screws to mount the switch circuit board 20 to the main body 2, and therefore it is possible to reduce the production cost. Further, the step for fixing the switch circuit board 20 onto the main body 2 is not necessary and therefore the manufacturing process can be simplified.

As described above, the present invention does not require screws to mount the switch circuit board 20 to the main body 2; however, it does not completely exclude the use of screws for fixing the switch circuit board 20 to the main body 2. In other words, the present invention does not exclude the use of screw for fixing the switch circuit board 20 to the main body 2 as auxiliary or temporary means. For example, in order to fix the switch circuit board 20 to the main body 2 even more firmly, auxiliary screws may be used in addition to the switch cover 10. Alternatively, in order to connect the connector 23 to the connector 27a, temporary screws may be used to temporarily fix the switch circuit board 20 to the main body 2. The temporary screws may be removed or left fixated after the connection between the connectors 23 and 27a is completed.

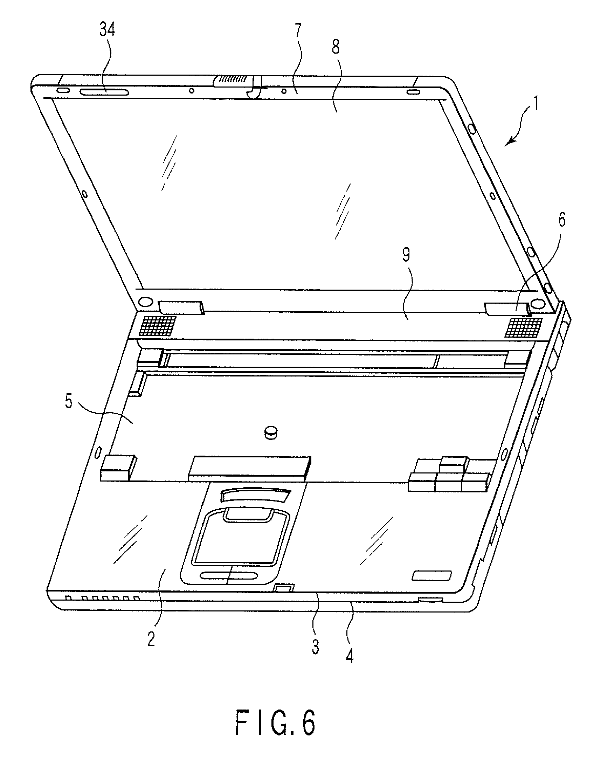

The present invention is not limited to the above-described embodiment, but it can be remodeled into various versions as long as the essence does not fall out of the scope of the invention. In the above-described embodiment, the mounting portion 13, switch circuit board 20 and switch cover 10 are provided on the upper surface of the housing, but it is alternatively possible to provide them on a side surface or bottom surface of the housing or a front or rear surface of the enclosure of the display unit 7. Further, the present invention is described in connection with the case where the switch circuit board 20 and switch cover 10 are mounted. However, it is alternatively possible to apply the invention to the case of a housing having a structure in which circuit boards are mounted (the circuit boards being those types that do not require an external operation, such as a radio circuit board, modem circuit board and memory circuit board). For example, such a structure as shown in FIG. 6 is alternatively possible. That is, a mounting portion is made in the front side of the enclosure of the display unit 7 to hold an antenna circuit board to connect the electronic apparatus 1 to a radio network, and the antenna circuit board is held by the above-described switch cover 34.

Further, the present invention is not limited to electronic apparatus such as personal computers, but it can be applied to some other electronic apparatus such as mobile phones, digital still camera and PDA or even more widely to a variety of other electronic apparatus.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An electronic apparatus comprising:
a housing including a mounting portion having a bottom wall;
a first circuit board held in the mounting portion and mounted on the bottom wall; and
a cover mounted in the housing such as to cover the first circuit board held in the mounting portion and having projections configured to hold the first circuit board between the bottom wall and the projections.

2. The electronic apparatus according to claim 1, wherein the first circuit board has switches, and the cover has projections configured to operate the switches, on an inner surface thereof to face the first circuit board, and operating portions configured to operate the projections.

3. The electronic apparatus according to claim 2, wherein the switches include a power switch.

4. The electronic apparatus according to claim 1, further comprising:
a main circuit board mounted inside the housing;
an opening portion provided in the mounting portion and communicating to the inside of the housing; and
a cable configured to electrically connect the first circuit board held in the mounting portion to the main circuit board in the housing via the opening portion.

5. The electronic apparatus according to claim 1, further comprising:
an opening portion provided in the mounting portion and communicating to the inside of the housing;
a first connector provided for the first circuit board;
a main circuit board mounted inside the housing; and
a second connector provided for the main circuit board, and electrically connected to the first connector of the first circuit board via the opening portion.

6. The electronic apparatus according to claim 1, wherein the mounting portion has engaging portions and the cover has latch pieces, the latch pieces detachably engaged to the engaging portions.

7. The electronic apparatus according to claim 1, wherein the bottom wall includes projections and the first circuit board includes positioning holes which the projections are inserted.
